(19) Europäisches Patentamt

European Patent Office

Office européen des brevets

(11) **EP 1 612 955 A1**

(12) **EUROPEAN PATENT APPLICATION**
published in accordance with Art. 158(3) EPC

(43) Date of publication:
04.01.2006 Bulletin 2006/01

(51) Int Cl.:
*H04B 1/40* (1968.09)

(21) Application number: 04703942.5

(22) Date of filing: 21.01.2004

(86) International application number:
**PCT/JP2004/000503**

(87) International publication number:
**WO 2004/091111 (21.10.2004 Gazette 2004/43)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 07.04.2003 WOPCT/JP03/04420

(71) Applicant: **MITSUBISHI DENKI KABUSHIKI KAISHA**
**Tokyo 100-8310 (JP)**
(72) Inventors:
• **NAKAMIZO, Hideyuki**
 **Mitsubishi Denki Kabushiki Kais**
 **Tokyo 100-8310 (JP)**
• **ITO, Tatsuya**
 **c/o Mitsubishi Denki Kabushiki Kaisha**
 **Tokyo 100-8310 (JP)**

(74) Representative: **Meissner, Bolte & Partner**
 **Anwaltssozietät GbR**
 **Postfach 86 06 24**
 **81633 München (DE)**

(54) **TRANSCEIVER AND RECEIVER**

(57) It is an object of the present invention to realize a transmitter/receiver and a receiver such as a mobile phone or a transceiver capable of controlling power supply to a receiving section with a high degree of accuracy. To realize this object, a transmitter/receiver may include: a receiving section (3); a quality of service detecting section (9); a transmission section (10) for generating a transmission wave; a transmission power detecting section (11) for detecting power of the transmission wave; a controller (12); and a memory (13), for example. The memory stores values of power supply which are responsive to the quality of service of the received wave and the transmission power of the transmission wave. The controller makes reference to the values of power supply stored in the memory to control the power to be supplied to the receiving section based on the detection result at the quality of service detecting section and the detection result at the transmission power detecting section.

F I G . 1

EP 1 612 955 A1

**Description**

Technical Field

The present invention relates to a transmitter/receiver and a receiver such as a mobile phone or a transceiver, and more particularly, to a transmitter/receiver and a receiver effectively usable for reduction in power consumption.

Background Art

A transmitter/receiver and a receiver such as a mobile phone has a section for receiving a high-frequency radio signal. The greater power supplied to the receiving section generally allows the transmitter/receiver and receiver to operate at the maximum operating point of the receiving section. As a result, improved NF (noise figure), distortion characteristics and receive gain of a received wave are obtained, which results in improved receive characteristic. Conversely, the smaller power supplied to the receiving section causes deviation from the maximum operating point to result in reduction in receive characteristic, which in turn allows reduced power consumption. The power to be supplied to the receiving section should thus be controlled according to the reception condition of the high-frequency radio signal. That is, in the event that the high-frequency radio signal is received in good condition, reduction in power consumption should be promoted which may even be accompanied by reduction in receive characteristic. In the event that the high-frequency radio signal is received in poor condition, increase in power supply to the receiving section should be promoted to enhance receive characteristic.

As an example, a patent document 1 identified below introduces a technique in which the power supply to the receiving section is controlled according to the detection result of an RSSI (receive signal strength indicator) signal indicating the reception condition.

In a device such as a mobile phone implementing a W-CDMA (wideband code division multiple access) system in which transmission and receipt temporally coincide, however, a transmission wave has an effect on a received wave, whereby deterioration of the receive characteristic is likely. The reception condition of the received wave is thus insufficient to provide a high degree of accuracy in controlling the power supply to the receiving section.

In a device such as a W-CDMA mobile phone that implements intermittent reception, the reception condition should be detected at each occurrence of intermittent reception. This causes difficulty in precisely detecting the reception condition from the initial stage of one intermittent reception to control the power supply to the receiving section with a high degree of accuracy.

In addition to the patent document 1, the similar technique is introduced in the following patent documents 2 and 3:

Patent Document 1
Japanese Patent Application Laid-Open No. 5-37408
Patent Document 2
Japanese Patent Application Laid-Open No. 8-18500
Patent Document 3
Japanese Patent Application Laid-Open No. 7-30957

Disclosure of the Invention

The present invention is intended to solve the foregoing problems, and to realize a transmitter/receiver and a receiver capable of controlling power supply to a receiving section with a high degree of accuracy.

A first aspect of a transmitter/receiver of the present invention includes: a receiving section (3) for amplifying a received wave; a transmission section (10) for generating a transmission wave; a controller (12); and a memory (13), wherein the memory stores values of power supply to the receiving section, the values being responsive to transmission power of the transmission wave, and wherein the controller makes reference to the values of power supply stored in the memory to control power to be supplied to the receiving section on the basis of the transmission power during transmission.

According to the first aspect of the transmitter/receiver of the present invention, the controller makes reference to the values of power supply stored in the memory to control power to be supplied to the receiving section on the basis of the transmission power during transmission. Thus, the power supply to the receiving section can be controlled with a high degree of accuracy on the basis of the signal strength of the transmission wave.

According to a second aspect of the transmitter/receiver of the present invention, the transmitter/receiver of the first aspect further includes a transmission power detecting section (11) for detecting power of the transmission wave, wherein the controller receives detection result at the transmission power detecting section to obtain information about the transmission power during transmission.

According to the second aspect of the transmitter/receiver of the present invention, the controller receives detection result at the transmission power detecting section to obtain information about the transmission power during transmission. Thus, the transmission power detecting section which covers a wide detection range while providing a high degree of detection accuracy makes it possible to precisely keep track of the transmission power during transmission, to thereby provide a higher degree of accuracy in controlling the power supply to the receiving section.

According to a third aspect of the transmitter/receiver of the present invention, the transmitter/receiver of the first aspect further includes a transmission power controller (18) for controlling the transmission power of the transmission wave at the transmission section by means of a transmission power control signal, wherein the controller receives the transmission power control signal to obtain information about the transmission power during transmission.

According to the third aspect of the transmitter/receiver of the present invention, the controller receives the transmission power control signal to obtain information about the transmission power during transmission. Thus, the transmitter/receiver including the transmission power controller does not require transmission power detecting section, thereby requiring no signal line between the transmission power detecting section and the controller. That is, there is inherently no resistance loss in this signal line. The unnecessity of the transmission power detecting section also avoids increase in circuit dimension. The unnecessity of the transmission power detecting section further allows control of the power supply to the receiving section with a high degree of accuracy with no reliance on the range of detection and detection accuracy in the transmission power detecting section.

According to a fourth aspect of the transmitter/receiver of the present invention, the transmitter/receiver of the first aspect further includes a quality of service detecting section (9) for detecting quality of service of the received wave, wherein the values of power supply stored in the memory are responsive to the quality of service of the received wave as well as to the transmission power, and wherein the controller makes reference to the values of power supply stored in the memory to control power to be supplied to the receiving section on the basis of detection result at the quality of service detecting section and the transmission power during transmission.

According to the fourth aspect of the transmitter/receiver of the present invention, the controller makes reference to the values of power supply stored in the memory to control power to be supplied to the receiving section on the basis of detection result at the quality of service detecting section and the transmission power during transmission. Thus, the power supply to the receiving section can be controlled with a high degree of accuracy on the basis of reception condition of the received wave and the signal strength of the transmission wave.

A first aspect of a receiver of the present invention includes: a receiving section (3) for amplifying a received wave obtained by intermittent reception; a quality of service detecting section (9) for detecting quality of service of the received wave; a controller (12); an operation section (15); and a memory (13), wherein the memory stores values of power supply to the receiving section, the values being responsive to the quality of service of the received wave, while data on the quality of service detected in the quality of service detecting section is written to the memory at each intermittent reception, wherein the operation section calculates the average of the quality of service by using the data of the quality of service during intermittent reception written to the memory, and wherein the controller makes reference to the values of power supply stored in the memory to control power to be supplied to the receiving section on the basis of the average of the quality of service calculated in the operation section.

According to the first aspect of the receiver of the present invention, the operation section calculates the average of the quality of service by using the data of the quality of service during intermittent reception written to the memory, and the controller makes reference to the values of power supply stored in the memory to control power to be supplied to the receiving section on the basis of the average of the quality of service calculated in the operation section. Thus, the power to be supplied to the receiving section can be controlled from the initial stage of one intermittent reception on the basis of data on the quality of service in the most recent past. As a result, the power supply to the receiving section can be controlled with a high degree of accuracy.

According to a second aspect of the receiver of the present invention, in the receiver of the first aspect, of several pieces of data on the quality of service, the operation section calculates the average while performing weighting to enhance the contribution of data temporally closer to the present.

According to the second aspect of the receiver of the present invention, of several pieces of data on the quality of service, the operation section calculates the average while performing weighting to enhance the contribution of data temporally closer to the present. This allows the most recent communication conditions to have larger influences on the correction, thereby providing a higher degree of accuracy in controlling the power supply to the receiving section.

According to a third aspect of the receiver of the present invention, the receiver of the first aspect further includes a traveling speed detector (16) capable of detecting the traveling speed of the receiver, wherein the operation section corrects the average such that the average is lowered with increase of the traveling speed.

According to the third aspect of the receiver of the present invention, the operation section corrects the average such that the average is lowered with increase of the traveling speed. Thus, the traveling conditions are allowed to have influences on the quality of service, thereby providing a higher degree of accuracy in controlling the power supply to the receiving section.

According to a fourth aspect of the receiver of the present invention, in the receiver of the first aspect, when the quality of service detecting section detects the latest of the quality of service during intermittent reception, the controller makes reference to the values of power supply stored in the memory to again control power to be supplied to the receiving section on the basis of the latest of the quality of service.

According to the fourth aspect of the receiver of the present invention, when the quality of service detecting section detects the latest of the quality of service during intermittent reception, the controller again control the power to be supplied to the receiving section. Thus, the power supply to the receiving section can be controlled in response to the latest communication conditions.

These and other objects, features, aspects and advantages of the present invention will become more apparent from the following detailed description of the present invention when taken in conjunction with the accompanying drawings.

Brief Description of Drawings

Fig. 1 shows the configuration of a transmitter/receiver according to a first embodiment of the present invention;
Fig. 2 is a flow chart showing the control operation of the transmitter/receiver according to the first embodiment;
Fig. 3 is a graph showing the relation between quality of service, transmission wave power, and power supply to a receiving section in the transmitter/receiver according to the first embodiment;
Fig. 4 shows the detailed configuration of a receiving-section-specific power control circuit in the transmitter/receiver according to the first embodiment;
Fig. 5 shows the configuration of a receiver according to a second embodiment of the present invention;
Fig. 6 is a flow chart showing the control operation of the receiver according to the second embodiment;
Fig. 7 is a graph showing the relation between quality of service and power supply to a receiving section in the receiver according to the second embodiment;
Fig. 8 shows the configuration of a transmitter/receiver according to a third embodiment of the present invention;
Fig. 9 is a flow chart showing the control operation of the transmitter/receiver according to the third embodiment;
Fig. 10 is an exemplary diagram showing the detailed configuration of a receiving-section-specific power control circuit 14; and
Fig. 11 is another exemplary diagram showing the detailed configuration of the receiving-section-specific power control circuit 14.

Best Mode for Carrying Out the Invention

First Embodiment

A first embodiment is directed to a transmitter/receiver for controlling the power supply to a receiving section on the basis of transmission power of a transmission wave (which may be alternatively referred to as transmission wave power) as well as quality of service of a received wave.

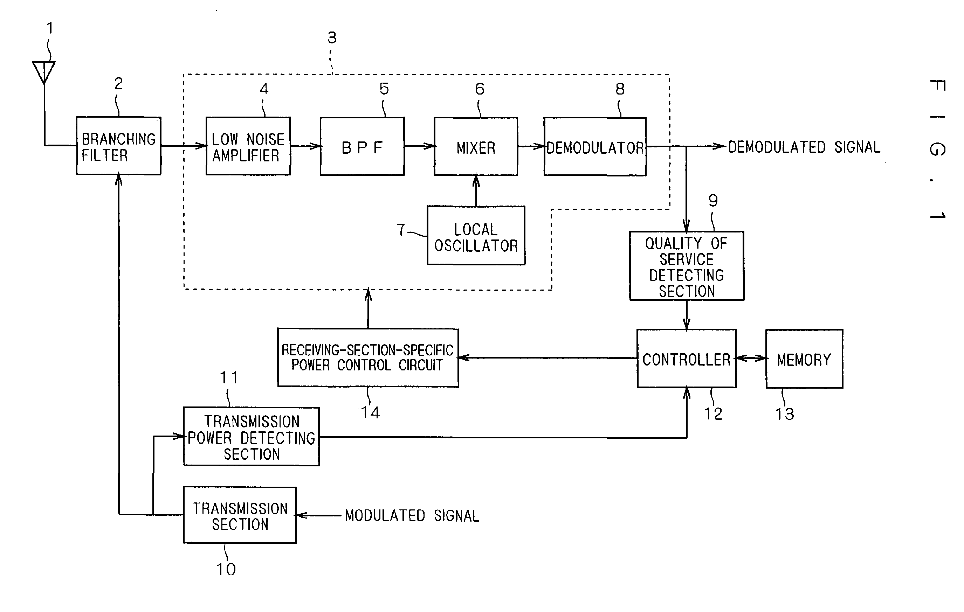

Fig. 1 shows the configuration of a transmitter/receiver according to the present embodiment. A received wave from a base station (not shown) is received at an antenna 1, and is then sent through a branching filter 2 to a receiving section 3.

The receiving section 3 includes an LNA (low noise amplifier) 4, a BPF (band pass filter) 5, a mixer 6, a local oscillator 7, and a demodulator 8. The low noise amplifier 4 amplifies the received wave, and the received wave thus amplified is subjected to filtering at the BPF 5 to produce a signal of a predetermined frequency band. The received wave as filtered is subjected to frequency conversion at the mixer 6 which receives a signal of a predetermined frequency from the local oscillator 7. The received wave after being subjected to frequency conversion is demodulated in the demodulator 8.

The transmitter/receiver of the present embodiment includes a quality of service detecting section 9 for detecting the quality of service of the demodulated received wave. The transmitter/receiver of the present embodiment further includes a controller 12 which is a CPU (central processing unit), and a memory 13 such as an SRAM (static random access memory) connected to the controller 12.

The transmitter/receiver of the present embodiment also includes a transmission section 10 for generating a transmission wave from a modulated signal sent from a signal generating section (not shown) and transmitting the generated transmission wave to the branching filter 2, and a transmission power detecting section 11 for detecting the transmission power of a transmission wave generated in the transmission section 10. The transmitter/receiver of the present embodiment further includes a receiving-section-specific power control circuit 14 that controls the power supply to the receiving section 3 in response to the instruction from the controller 12.

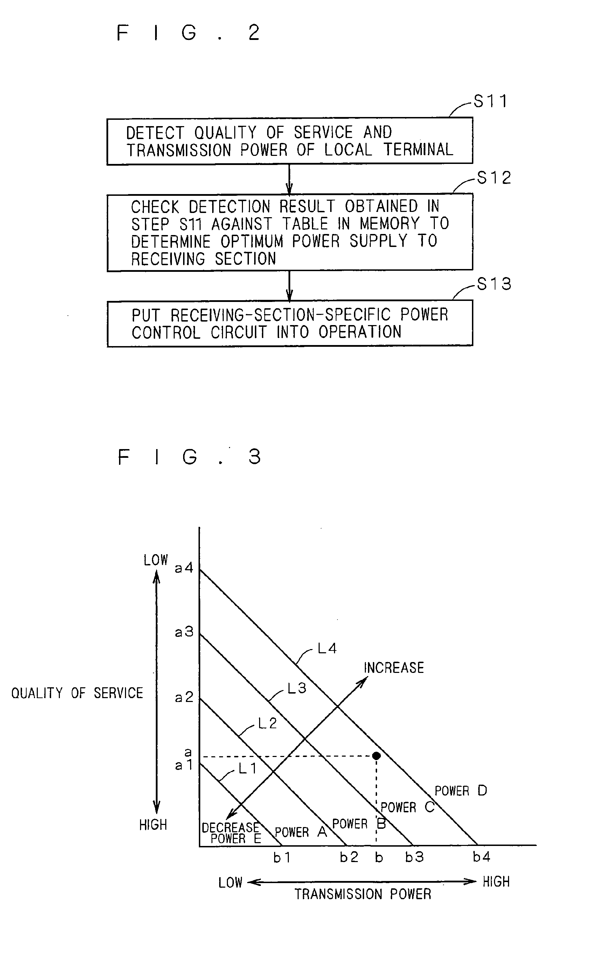

Next, the operation of the transmitter/receiver of the present embodiment will be discussed. Fig. 2 is a flow chart showing the control operation of the transmitter/receiver according to the present embodiment.

First, the quality of service detecting section 9 detects the quality of service of the demodulated received wave. More specifically, an index indicating the quality of service such as Ec/Io (ratio of average power to input signal power of a pilot channel) of a CPICH (common pilot channel) or an RSSI signal is calculated in the quality of service detecting section 9. The transmission power detecting section 11 detects the transmission wave power. As an example, the transmission power detecting section 11 may be a measuring device for measuring the transmission wave power by means of a thermocouple or a Hall element. The information about the quality of service and the transmission wave power is sent to the controller 12 (step S11). That is, the controller 12 receives the detection result at the quality of service detecting section 9 and the detection result at the transmission power detecting section 11, to thereby obtain the information about the quality of service and the information about the transmission power during transmission of a transmission wave.

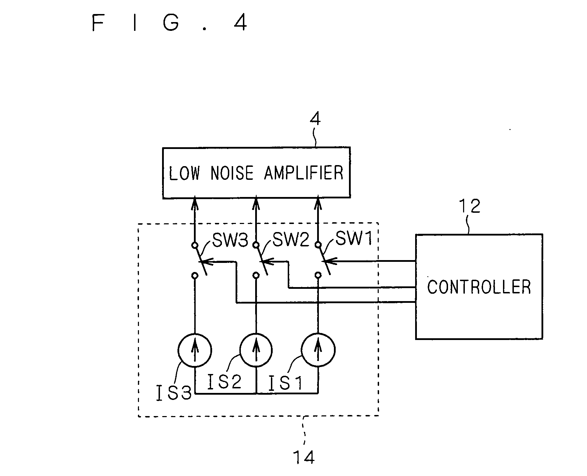

The memory 13 previously stores values of power to be supplied to the receiving section 3 which are responsive to the quality of service and the transmission wave power. As a more specific example, in the graph of Fig. 3 in which the vertical axis represents the quality of service and the horizontal axis represents the transmission wave power, the values of power to be supplied to the receiving section 3 are specified in each region of the graph. That is, with reference to Fig. 3, the power supply to the receiving section 3 is divided into five stages including power values A through E (E < A < B < C < D). In response to the values of quality of service and the transmission wave power, it is determined which one of the power values A through E is employed.

More specifically, with reference to Fig. 3, the power value A is employed in a region defined between a line L1 connecting a value a1 of the quality of service and a value b1 of the transmission wave power, and a line L2 connecting a value a2 (< a1) of the quality of service and a value b2 (> b1) of the transmission wave power. Similarly, the power value B is employed in a region defined between the line L2 and a line L3 connecting a value a3 (< a2) of the quality of service and a value b3 (> b2) of the transmission wave power. In a region defined between the line L3 and a line L4 connecting a value a4 (< a3) of the quality of service and a value b4 (> b3) of the transmission wave power, the power value C is employed. The power value D is used in the upper right region with respect to the line L4. The power value E is used in the lower left region with respect to the line L1.

With reference to Fig. 3, the power supply to the receiving section 3 is controlled to decrease with the increase in value of the quality of service, or alternatively, with the reduction in value of the transmission wave power. This is intended to decrease the power supply to the receiving section 3 to promote reduction in power consumption, since the high value of the quality of service is considered to show the received wave has been transmitted with a sufficient amount of power, or alternatively, since the low transmission wave power has a small effect on the received wave.

Conversely, the power supply to the receiving section 3 is controlled to increase with the decrease in value of the quality of service, or alternatively with the increase in value of the transmission wave power. This is intended to increase the power supply to the receiving section 3 for allowing the receiving section 3 to operate at a maximum operating point to realize enhancement in receive characteristic, since the low value of the quality of service is considered to show poor reception condition, or alternatively, since the high transmission wave power has a large effect on the received wave.

In Fig. 3, the power to be supplied to the receiving section 3 is changed in a stepwise manner in the stages E, A, B, C and D. Alternatively, the power to the receiving section 3 may be changed gradually, not in a stepwise manner, in response to the quality of service and the transmission wave power.

Based on the detection result at the quality of service detecting section 9 and the transmission power during transmission of a transmission wave (more specifically, the detection result at the transmission power detecting section 11), the controller 12 makes reference to the values of power supply stored in the memory 13 to determine the power supply to the receiving-section-specific power control circuit 14 (step S12). More specifically, based on the information about the quality of service and the transmission wave power, the controller 12 determines which region in the graph of Fig. 3 includes the values of quality of service and the transmission wave power with reference to the contents stored in the memory 13. As shown in Fig. 3, when the quality of service has a value a and the transmission wave power has a value b, for example, the power to be supplied to the receiving section 3 is set to have the power value C. The information of the power value thus set is sent from the controller 12 to the receiving-section-specific power control circuit 14 (step S 13).

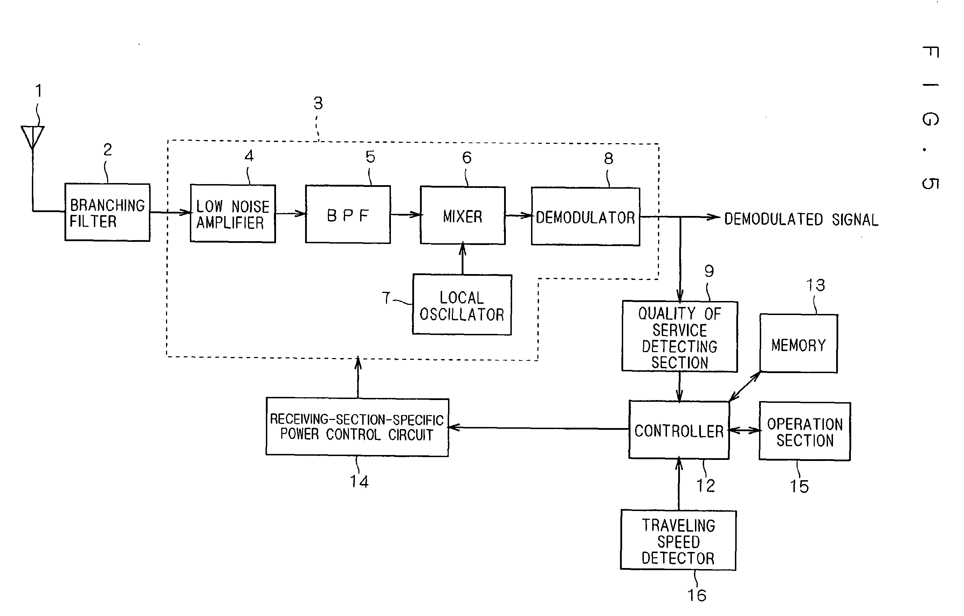

Fig. 4 is an exemplary diagram showing the detailed configuration of the receiving-section-specific power control circuit 14. The receiving-section-specific power control circuit 14 includes current sources IS1 through IS3, and switches SW1 through SW3. In response to the instruction from the controller 12, the receiving-section-specific power control circuit 14 controls the power supply to the low noise amplifier 4.

That is, the current sources IS1 through IS 3 are respectively connected to the switches SW1 through SW 3. Currents generated in the current sources IS1 through IS3 are capable of flowing into the low noise amplifier 4 through the switches SW1 through SW3, respectively. The controller 12 turns one of the switches SW1 through SW3, or two or more of them, to control the amount of current flowing into the low noise amplifier 4. The current sources IS1 through IS3 may generate the same amount or different amounts of current.

According to the transmitter/receiver of the present embodiment, based on the detection result at the quality of service detecting section 9 and the transmission power during transmission of a transmission wave (more specifically, the detection result at the transmission power detecting section 11), the controller 12 makes reference to the values of power supply stored in the memory 13 to control the power to be supplied to the receiving section 3. As a result, the power supply to the receiving section 3 can be controlled with a high degree of accuracy on the basis of the signal strength of the transmission wave as well as the reception condition of the received wave.

In the present embodiment, both the detection result at the quality of service detecting section 9 and the transmission power during transmission of a transmission wave (the detection result at the transmission power detecting section 11) are used by the controller 12 to control the power to be supplied to the receiving section 3. Alternatively, only the transmission power during transmission of a transmission wave (the detection result at the transmission power detecting section 11) may be used to control the power to be supplied to the receiving section 3. In this case, the power supply to the receiving section can be also controlled with a high degree of accuracy on the basis of the signal strength of the transmission wave.

In the present embodiment, the controller 12 receives the detection result at the transmission power detecting section 11 to obtain the information about the transmission power during transmission. Hence, the transmission power detecting section 12 which covers a wide detection range while providing a high degree of detection accuracy makes it possible to precisely keep track of the transmission power during transmission, to thereby provide a higher degree of accuracy in controlling the power supply to the receiving section.

Second Embodiment

A second embodiment is directed to a receiver implementing intermittent reception. Based on the average of the quality of service in intermittent reception in the past, the receiver controls the power supply to a receiving section.

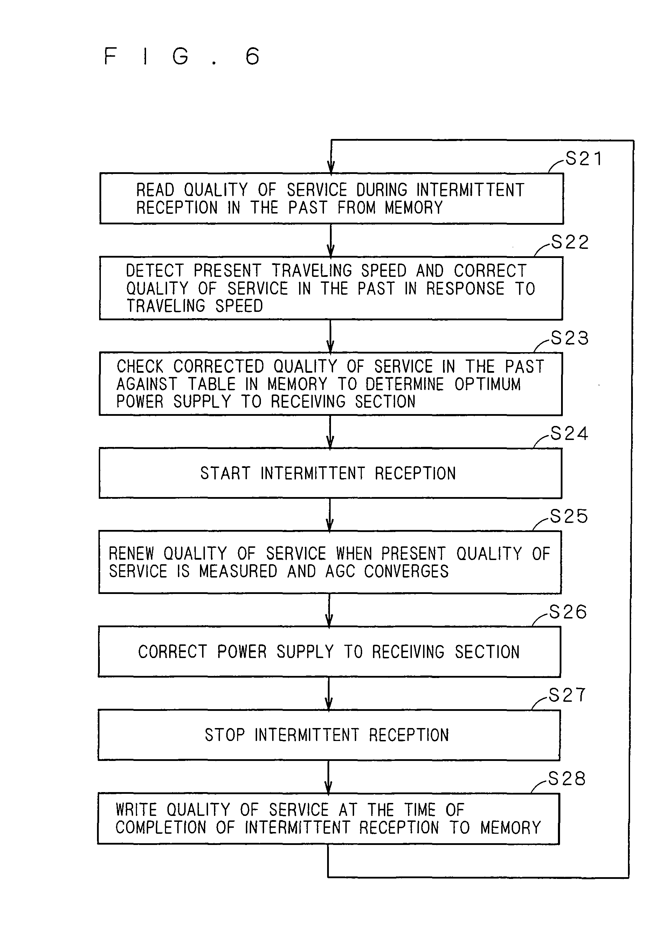

Fig. 5 shows the configuration of the receiver according to the present embodiment which includes the antenna 1, branching filter 2, receiving section 3, quality of service detecting section 9, controller 12, memory 13, and the receiving-section-specific power control circuit 14 that are the same in configuration as those of the transmitter/receiver of the first embodiment. The receiving section 3 is allowed to perform intermittent reception. The present embodiment is directed to a receiver and thus does not include the transmission power detecting section 11 and transmission section 10. Alternatively, the present embodiment may include these sections to constitute a transmitter/receiver.

The receiver of the present embodiment further includes an operation section 15 such as a DSP (digital signal processor), and a traveling speed detector 16 capable of detecting the traveling speed of the receiver. As an example, the traveling speed detector 16 may be the device introduced in Japanese Patent Application Laid-Open No. 11-252633.

In the case of a mobile phone, for example, the quality of service is constantly measured during continuous reception such as a voice call, whereby the power supply to the receiving section can be optimally controlled based on the latest detection result of the quality of service. In contrast, during intermittent reception such as a standby mode, it is difficult to precisely measure the reception condition from the initial stage of one intermittent reception. Hence, the power supply to the receiving section 3 cannot be necessarily controlled with a high degree of accuracy.

In response, in the present embodiment, the controller 12 controls the power supply to the receiving section 3 on the basis of measurements of the quality of service in several intermittent receiving operations in the past. For such control, the controller 12 writes data on the quality of service to the memory 13 at each intermittent receiving operation, whereby the data on the quality of service in several intermittent receiving operations in the past is accumulated in the memory 13.

After one intermittent receiving operation and prior to a subsequent intermittent receiving operation, the controller 12 reads the stored data on the quality of service in the past from the memory 13 to cause the operation section 15 to calculate the average of the data. Based on the result of calculation, the controller 12 controls the receiving-section-specific power control circuit 14.

In the second embodiment, of several pieces of data on the quality of service, the operation section 15 calculates the average of the quality of service while performing weighting to enhance the contribution of data temporally closer to the present, thereby emphasizing the most recent communication conditions. As a specific example of weighting, when the average of RSSI signals in four intermittent receiving operations in the past is to be calculated, the contribution ratio of the data immediately before the present is controlled to 100 %, whereas the contribution ratios of the pieces of preceding data are controlled to 50 %, 30 % and 20 % in reverse chronological order.

By way of example, when the RSSI signals in four intermittent receiving operations in the past have values 0.60, 0.90, 1.10 and 1.00, the simply calculated average is obtained by:

$$(0.60 + 0.90 + 1.10 + 1.00) / 4 = 0.90$$

However, the average by means of the foregoing weighting is obtained by:

$$(0.60 \times 1 + 0.90 \times 0.5 + 1.10 \times 0.3 + 1.00 \times 0.2) / (1 + 0.5 + 0.3 + 0.2) = 0.79$$

In the present embodiment, in order to enhance the measurement accuracy of the quality of service in intermittent reception, the operation section 15 corrects the average of the quality of service in consideration of the present traveling speed of the receiver. The data on the traveling speed of the receiver detected in the traveling speed detector 16 is sent by the controller 12 to the operation section 15.

The quality of service is generally lowered with increase of the traveling speed. Thus, the operation section 15 corrects the average of the quality of service such that the value of quality of service is lowered with increase of the traveling speed. As a specific example, the corrected average is 100 % of the calculated average of the RSSI signals when the traveling speed ranges from 0 to 8 km/hr. When the traveling speed ranges from 8 to 16 km/hr, from 16 to 24 km/hr, and is 24 km/hr or over, the corrected averages are 90 %, 80 % and 70 %, respectively.

When the value 0.79 calculated above after weighting is used as an exemplary average, the corrected average is obtained by 0.79 x 0.8 = 0.63 when the present traveling speed is 20 km/hr.

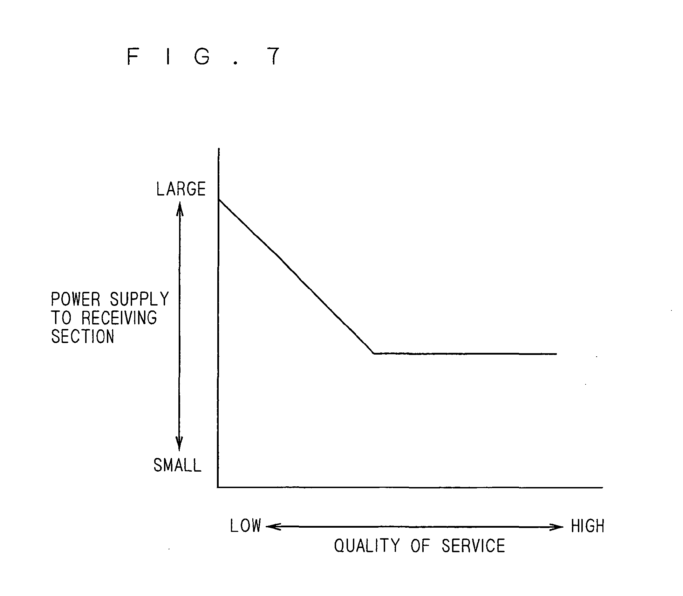

Fig. 6 is a flow chart showing the control operation of the receiver according to the present embodiment.

First, the controller 12 reads the stored data on the quality of service in the past from the memory 13 (step S21). The operation section 15 is thereafter caused to calculate the average of the read data while performing the weighting as discussed.

The controller 12 also causes the traveling speed detector 16 to detect the present traveling speed of the receiver, and sends the detected information to the operation section 15. The operation section 15 corrects the calculated average in a manner discussed above (step S22).

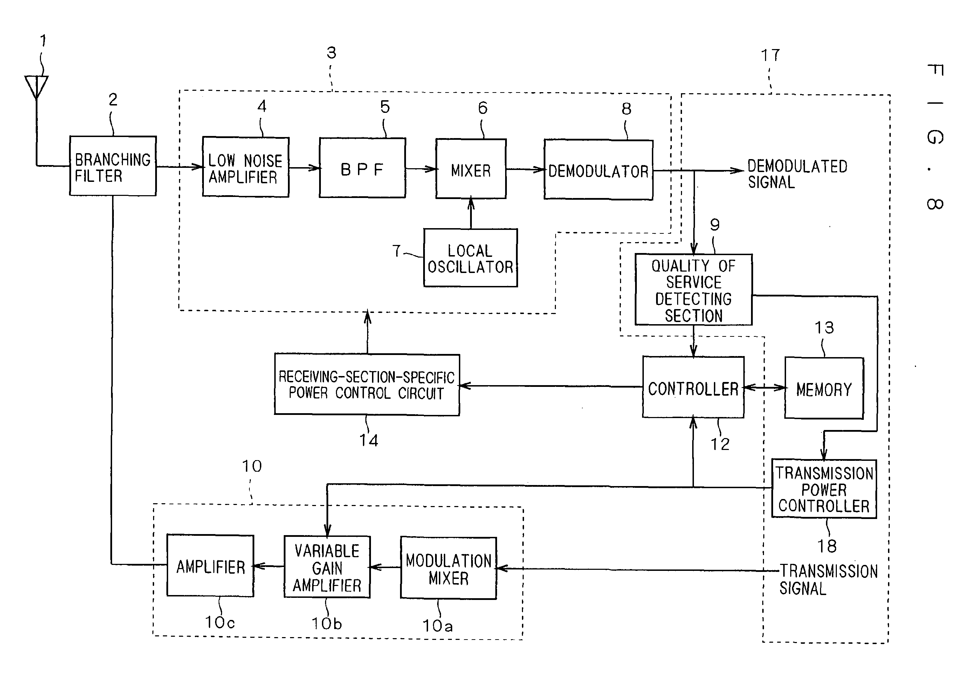

The memory 13 previously stores values of power to be supplied to the receiving section 3 in response to the quality of service. As a more specific example, with reference to the graph of Fig. 7 with vertical and horizontal axes respectively indicating the power supply to the receiving section and quality of service, the power supply to the receiving section is kept at a constant level when the quality of service is at a value not less than a predetermined value. When the quality of service is at a value less than the predetermined value, the power supply to the receiving section is linearly increased with reduction of the quality of service.

Based on the average of the quality of service corrected in the operation section 15, the controller 12 makes reference to the values of power supply stored in the memory 13 to determine the power to be supplied to the receiving-section-specific power control circuit 14 (step S23). Thereafter intermittent reception is started, and the information indicating the determined power is sent from the controller 12 to the receiving-section-specific power control circuit 14 (step S24).

The receiving section 3 performs AGC (automatic gain control) process during intermittent reception. At the time when an output voltage converges by the AGC process and the present quality of service is detected in the quality of service detecting section 9, the controller 12 renews the average calculated in the past into the present quality of service (step S25). Then the controller 12 makes reference to the values of power supply stored in the memory 13 to again determine the value of power to be supplied, and sends the determined value to the receiving-section-specific power control circuit 14. In response to this information, the receiving-section-specific power control circuit 14 corrects the value of power to be supplied to the receiving section 3 (step S26).

This is because AGC process is not completed in the initial stage of intermittent reception and the power supply to the receiving section should be determined on the basis of several measurements of the quality of service in the past. When the information about the most recent quality of service is obtained during intermittent reception, this information is preferably used to control the power supply to the receiving section again.

Thereafter the receiving section 3 stops intermittent reception (step S27), and the controller 12 writes the information about the quality of service at the time of completion of intermittent reception to the memory 13 (step S28). Then, the process flow returns to step S21 in which the controller 12 again determines the value of power to be supplied to the receiving section 3 using the measurements of the quality of service in the intermittent receiving operations in the past.

According to the receiver of the present embodiment, the operation section 15 calculates the average of the quality of service using several pieces of data on the quality of service written to the memory 13. The controller 12 makes reference to the values of power supply stored in the memory 13 to control the power to be supplied to the receiving section 3 based on the calculated average of the quality of service. Accordingly, the power to be supplied to the receiving section 3 can be controlled from the initial stage of one intermittent reception, thereby providing a high degree of accuracy in controlling the power supply to the receiving section 3. This provides effectiveness especially in those systems which are not allowed to measure RSSI signals until completion of the AGC process such as a W-CDMA system.

Of several pieces of data on the quality of service, the operation section 15 calculates the average while performing weighting to enhance the contribution of data temporally closer to the present. This allows the most recent communication conditions to have larger influences on the correction, thereby providing a higher degree of accuracy in controlling the power supply to the receiving section 3.

Further, the operation section 15 corrects the average of the quality of service such that the average is lowered with increase of the traveling speed. Thus, the traveling conditions of the receiver are allowed to have influences on the quality of service, thereby providing a higher degree of accuracy in controlling the power supply to the receiving section 3.

When the quality of service detecting section 9 detects the latest quality of service during intermittent reception, the controller 12 again controls the power to be supplied to the receiving section 3. As a result, the power supply to the receiving section 3 can be controlled in response to the latest communication conditions.

Third Embodiment

A third embodiment is a modification of the transmitter/receiver according to the first embodiment. The controller 12 receives a transmission power control signal instead of the detection result obtained in the transmission power detecting section 11, to obtain the information about the transmission power of a transmission wave during transmission.

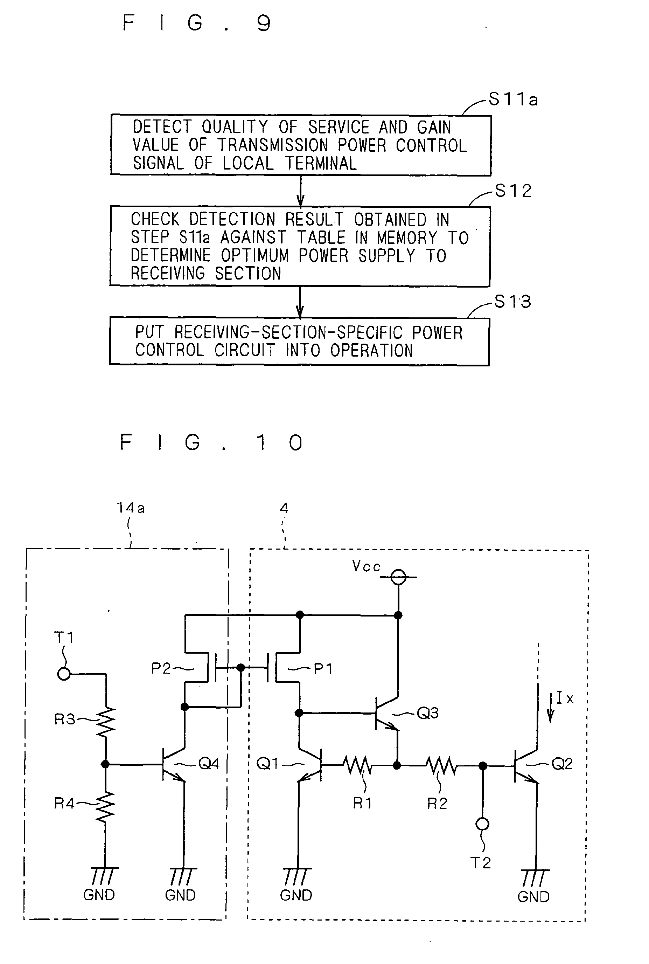

Fig. 8 shows the configuration of a transmitter/receiver according to the present embodiment. The transmitter/receiver of the present embodiment includes the antenna 1, branching filter 2, receiving section 3, quality of service detecting section 9, transmission section 10, controller 12, memory 13 and receiving-section-specific power control circuit 14 which also constitute the transmitter/receiver of the first embodiment.

In the transmitter/receiver, a demodulated signal demodulated in the demodulator 8 (which is namely a baseband signal) is generally subjected to signal processing. In Fig. 8, a baseband section responsible for this signal processing is shown as a block identified by reference numeral 17. The baseband section 17 includes a signal processing circuit (not shown) for processing a demodulated signal sent from the demodulator 8, a signal generation circuit (not shown) for generating a transmission signal, and a transmission power controller 18 for generating a transmission power control signal which controls the transmission power of a transmission wave at the transmission section 10. The quality of service detecting section 9 is a part of the baseband section 17.

In Fig. 8, a modulation mixer 10a, a variable gain amplifier 10b and an amplifier 10c are shown as part of the transmission section 10. The modulation mixer 10a modulates a transmission signal sent from the baseband section 17. The variable gain amplifier 10b amplifies the modulated signal sent from the modulation mixer 10a by a variable gain value. The amplifier 10c amplifies the output from the variable gain amplifier 10b. The signal amplified in the amplifier 10c is sent through the branching filter 2 to the antenna 1 for transmission.

The variable gain amplifier 10b receives a transmission power control signal sent from the transmission power controller 18. Based on the transmission power control signal from the transmission power controller 18, the variable gain amplifier 10b controls the transmission power of a transmission wave.

The transmission power controller 18 generates the transmission power control signal on the basis of the detection result of the quality of service obtained in the quality of service detecting section 9. The transmission power control signal indicates the transmission power of a transmission wave required for transmission. As a specific example, the transmission power controller 18 performs operation by substituting the value of the RSSI signal calculated in the quality of service detecting section 9 into a predetermined numeral expression, and calculates the gain value (such as 10 dB, 20dB and the like) at the variable gain amplifier 10b in response to the value of the RSSI signal. The transmission power control signal indicates this gain value. The greater gain value at the variable gain amplifier 10b results in greater transmission power of a transmission wave during transmission. The smaller gain value results in smaller transmission power of a transmission wave during transmission.

Generally, it is assumed that the low quality of the detection result of the quality of service is caused by a great distance between a base station and a communication terminal. Hence, the transmission power controller 18 increases the gain value at the variable gain amplifier 10b to strengthen the transmission power, thereby enhancing the signal strength of the transmission wave. On the other hand, it is assumed that the high quality of the detection result of the quality of service is caused by a small distance between the base station and the communication terminal. Hence, the transmission power controller 18 decreases the gain value at the variable gain amplifier 10b to lower the transmission power, thereby trying to reduce power consumption.

By way of example, in the case of a mobile phone implementing a W-CDMA system, the transmission power control signal sent from the transmission power controller 18 performs control such that the transmission power of a transmission wave falls within a range of 74 dB or more in units of 1 dB.

In the present embodiment, the controller 12 receives the transmission power control signal to obtain the information about the transmission power of a transmission wave during transmission, thereby controlling the power to be supplied to the receiving section 3.

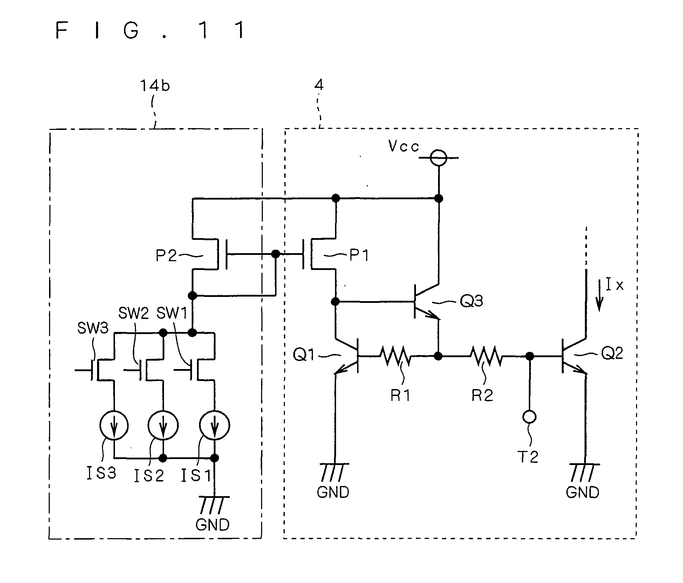

The operation of the transmitter/receiver of the present embodiment will be discussed. Fig. 9 is a flow chart showing the control operation of the transmitter/receiver according to the present embodiment.

First, in the quality of service detecting section 9, the quality of service is detected from a demodulated received wave. The transmission power control signal is generated in the transmission power controller 18. The information about the quality of service and about the transmission power control signal (namely, the information about the gain value) is sent to the controller 12 (step S11a). That is, upon receipt of the detection result at the quality of service detecting section 9 and the transmission power control signal, the controller 12 obtains the information about the quality of service and about the transmission power of a transmission wave during transmission.

The memory 13 previously stores values of power supply to the receiving section 3 which are responsive to the quality of service and the transmission wave power. More specifically, in the graph similar to that of Fig. 3 shown in the first embodiment, the values of power to the receiving section 3 are specified in each region of the graph. However, the graph of the third embodiment differs from the graph of Fig. 3 in that its horizontal axis represents the gain values at the variable gain amplifier 10b and not the measured values of transmission power.

Based on the detection result at the quality of service detecting section 9 and the transmission power of a transmission wave during transmission (which is more specifically the gain value indicated by the transmission power control signal), the controller 12 makes reference to the values of power supply stored in the memory 13 to determine the power to be supplied to the receiving-section-specific power control circuit 14 (step S12). The information of the power value thus set is sent from the controller 12 to the receiving-section-specific power control circuit 14 (step S 13).

As an example, the output signal from the controller 12 may be an analog signal representing the gain value by variable voltage values, or a digital signal representing the gain value by digital data. The detailed configuration of the receiving-section-specific power control circuit 14 is designed according to the type of each signal.

Figs. 10 and 11 are exemplary diagrams each showing the detailed configuration of the receiving-section-specific power control circuit 14. Fig. 10 shows an exemplary configuration when the output signal from the controller 12 is an analog signal indicating variable voltage values. Fig. 11 shows an exemplary configuration when the output signal from the controller 12 is a digital signal.

With reference to Fig. 10, when the output signal from the controller 12 is an analog signal, a receiving-section-specific power control circuit 14a has a series connection of resistors R3 and R4, and transistors P2 and Q4. One end of the resistor R3 is an input terminal T1 receiving the output signal from the controller 12. A ground potential GND is applied to one end of the resistor R4 and to the emitter of the transistor Q4.

Respective other ends of the resistors R3 and R4 are both connected to the base of the transistor Q4. The drain and gate of the transistor P2 are connected to the collector of the transistor Q4, and a power supply potential Vcc is applied to the source of the transistor P2.

With reference to Fig. 10, the low noise amplifier 4 has a series connection of resistors R1 and R2, and transistors P1, Q1, Q2 and Q3. The gate of the transistor P1 is connected to the drain and gate of the transistor P2, and the power supply potential Vcc is applied to the source of the transistor P1. The drain of the transistor P1 and the base of the transistor Q3 are connected to the collector of the transistor Q1. The ground potential GND is applied to the respective emitters of the transistors Q1 and Q2. The power supply potential Vcc is applied to the collector of the transistor Q3.

The base of the transistor Q1 is connected to one end of the resistor R1. The base of the transistor Q2 is connected to one end of the resistor R2. Respective other ends of the resistors R1 and R2 are both connected to the emitter of the transistor Q3. The base of the transistor Q2 is an input terminal T2 receiving the signal from the branching filter 2. A current Ix flowing through the collector of the transistor Q2 is a current signal as a result of amplification of the signal from the branching filter 2.

The transistors P1 and P2 form a current mirror circuit. The transistors Q1 and Q2 form another current mirror circuit. The resistors R1 and R2 serve to prevent the signal received at the input terminal T2 from exerting an effect on the operations of the transistors Q1 and Q3. The transistor Q3 serves to provide stability of the operations of the transistors Q1 and Q2.

The level of the output signal as an analog signal indicating variable voltage values sent from the controller 12 to the input terminal T1 causes change in the volume of current flowing into the base of the transistor Q4. This change in the volume of current is transmitted through the current mirror circuit including the transistors P1 and P2 and another current mirror circuit including the transistor Q1 and Q2 to the current Ix.

With reference to Fig. 11, when the output signal from the controller 12 is a digital signal, a receiving-section-specific power control circuit 14b includes the same current sources IS1 through IS3 and switches SW1 through SW3 (which are transistors) as those shown in Fig. 4. The receiving-section-specific power control circuit 14b further includes the transistor P2. The transistor P2 and the low noise amplifier 4 connected thereto have the same configurations as those shown in Fig. 10, and thus, the description thereof is omitted.

The switches SW1 through SW3 are respectively connected to the current sources IS1 through IS3. That is, the respective sources of the transistors as switches are connected to the current sources IS1 through IS3. The respective drains of the transistors as switches are all connected to the drain of the transistor P2.

Currents generated by the current sources IS1 through IS3 respectively pass through the switches SW1 through SW3 to cause current flow in the transistor P2. Similar to the example illustrated in Fig. 10, the current flowing in the transistor P2 is transmitted through the two current mirror circuits to the current Ix.

The output signal from the controller 12 turns one of the switches SW1 through SW3, or two or more of them (performs on-off control of the gate of each transistor), to control the amount of current flowing into the low noise amplifier 4. The current sources IS1 through IS3 may generate the same amount or different amounts of current.

In the transmitter/receiver of the present embodiment, the controller 12 receives the transmission power control signal to obtain the information about the transmission power during transmission. Thus, the transmitter/receiver including the transmission power controller 18 does not require the transmission power detecting section 11 discussed in the first embodiment, thereby requiring no signal line between the transmission power detecting section 11 and the controller 12. That is, there is inherently no resistance loss in this signal line. The unnecessity of the transmission power detecting section 11 also avoids increase in circuit dimension. The unnecessity of the transmission power detecting section 11 further allows control of the power supply to the receiving section 3 with a high degree of accuracy with no reliance on the range of detection and detection accuracy in the transmission power detecting section 11.

In the present embodiment, both the detection result at the quality of service detecting section 9 and the transmission power of a transmission wave during transmission (the transmission power control signal) are used by the controller 12 to control the power to be supplied to the receiving section 3. Alternatively, only the transmission power of a transmission wave during transmission (the transmission power control signal) may be used to control the power to be supplied to the receiving section 3. In this case, the power supply to the receiving section can be also controlled with a high degree of accuracy on the basis of the signal strength of the transmission wave.

While the invention has been shown and described in detail, the foregoing description is in all aspects illustrative and not restrictive. It is therefore understood that numerous modifications and variations can be devised without departing from the scope of the invention.

Industrial Applicability

The present application is applicable to devices including transmitters/receivers and receivers. As an example, the present invention is applicable to communication devices such as a mobile phone, transceiver, PDA (personal digital assistance), notebook personal computer, and the like.

**Claims**

1. A transmitter/receiver, comprising:

    a receiving section (3) for amplifying a received wave;
    a transmission section (10) for generating a transmission wave;
    a controller (12); and
    a memory (13),
    wherein said memory stores values of power supply to said receiving section, said values being responsive to transmission power of said transmission wave, and
    wherein said controller makes reference to said values of power supply stored in said memory to control power to be supplied to said receiving section on the basis of said transmission power during transmission.

2. The transmitter/receiver according to claim 1, further comprising:

    a transmission power detecting section (11) for detecting power of said transmission wave,
    wherein said controller receives detection result at said transmission power detecting section to obtain information about said transmission power during transmission.

3. The transmitter/receiver according to claim 1, further comprising:

    a transmission power controller (18) for controlling said transmission power of said transmission wave at said transmission section by means of a transmission power control signal,
    wherein said controller receives said transmission power control signal to obtain information about said transmission power during transmission.

4. The transmitter/receiver according to claim 1, further comprising:

a quality of service detecting section (9) for detecting quality of service of said received wave,
wherein said values of power supply stored in said memory are responsive to said quality of service of said received wave as well as to said transmission power, and
wherein said controller makes reference to said values of power supply stored in said memory to control power to be supplied to said receiving section on the basis of detection result at said quality of service detecting section and said transmission power during transmission.

5. A receiver, comprising:

a receiving section (3) for amplifying a received wave obtained by intermittent reception;
a quality of service detecting section (9) for detecting quality of service of said received wave;
a controller (12);
an operation section (15); and
a memory (13),
wherein said memory stores values of power supply to said receiving section, said values being responsive to said quality of service of said received wave, while data on said quality of service detected in said quality of service detecting section is written to said memory at each intermittent reception,
wherein said operation section calculates the average of said quality of service by using said data of said quality of service during intermittent reception written to said memory, and
wherein said controller makes reference to said values of power supply stored in said memory to control power to be supplied to said receiving section on the basis of said average of said quality of service calculated in said operation section.

6. The receiver according to claim 5,
wherein, of several pieces of data on said quality of service, said operation section calculates said average while performing weighting to enhance the contribution of data temporally closer to the present.

7. The receiver according to claim 5, further comprising:

a traveling speed detector (16) capable of detecting the traveling speed of said receiver,
wherein said operation section corrects said average such that said average is lowered with increase of said traveling speed.

8. The receiver according to claim 5,
wherein when said quality of service detecting section detects the latest of said quality of service during intermittent reception, said controller makes reference to said values of power supply stored in said memory to again control power to be supplied to said receiving section on the basis of said latest of said quality of service.

F I G . 1

F I G . 2

```
                                                      ┌─S11
┌─────────────────────────────────────────────┐
│ DETECT QUALITY OF SERVICE AND               │
│ TRANSMISSION POWER OF LOCAL TERMINAL        │
└─────────────────────────────────────────────┘
                      │                               ┌─S12
                      ▼
┌─────────────────────────────────────────────┐
│ CHECK DETECTION RESULT OBTAINED IN          │
│ STEP S11 AGAINST TABLE IN MEMORY TO         │
│ DETERMINE OPTIMUM POWER SUPPLY TO           │
│ RECEIVING SECTION                           │
└─────────────────────────────────────────────┘
                      │                               ┌─S13
                      ▼
┌─────────────────────────────────────────────┐
│ PUT RECEIVING-SECTION-SPECIFIC POWER        │
│ CONTROL CIRCUIT INTO OPERATION              │
└─────────────────────────────────────────────┘
```

F I G . 3

FIG. 4

FIG. 5

F I G . 6

```
                                                        ┌─S21
┌────────────────────────────────────────────────────┐
│ READ QUALITY OF SERVICE DURING INTERMITTENT        │
│ RECEPTION IN THE PAST FROM MEMORY                  │
└────────────────────────────────────────────────────┘
                                                        ┌─S22
┌────────────────────────────────────────────────────┐
│ DETECT PRESENT TRAVELING SPEED AND CORRECT         │
│ QUALITY OF SERVICE IN THE PAST IN RESPONSE TO      │
│ TRAVELING SPEED                                     │
└────────────────────────────────────────────────────┘
                                                        ┌─S23
┌────────────────────────────────────────────────────┐
│ CHECK CORRECTED QUALITY OF SERVICE IN THE PAST     │
│ AGAINST TABLE IN MEMORY TO DETERMINE OPTIMUM       │
│ POWER SUPPLY TO RECEIVING SECTION                  │
└────────────────────────────────────────────────────┘
                                                        ┌─S24
┌────────────────────────────────────────────────────┐
│           START INTERMITTENT RECEPTION             │
└────────────────────────────────────────────────────┘
                                                        ┌─S25
┌────────────────────────────────────────────────────┐
│ RENEW QUALITY OF SERVICE WHEN PRESENT QUALITY OF   │
│ SERVICE IS MEASURED AND AGC CONVERGES              │
└────────────────────────────────────────────────────┘
                                                        ┌─S26
┌────────────────────────────────────────────────────┐
│     CORRECT POWER SUPPLY TO RECEIVING SECTION      │
└────────────────────────────────────────────────────┘
                                                        ┌─S27
┌────────────────────────────────────────────────────┐
│           STOP INTERMITTENT RECEPTION              │
└────────────────────────────────────────────────────┘
                                                        ┌─S28
┌────────────────────────────────────────────────────┐
│ WRITE QUALITY OF SERVICE AT THE TIME OF            │
│ COMPLETION OF INTERMITTENT RECEPTION TO MEMORY     │
└────────────────────────────────────────────────────┘
```

F I G . 7

F I G . 8

F I G . 9

DETECT QUALITY OF SERVICE AND GAIN
VALUE OF TRANSMISSION POWER CONTROL
SIGNAL OF LOCAL TERMINAL — S11a

CHECK DETECTION RESULT OBTAINED IN
STEP S11a AGAINST TABLE IN MEMORY TO
DETERMINE OPTIMUM POWER SUPPLY TO
RECEIVING SECTION — S12

PUT RECEIVING-SECTION-SPECIFIC POWER
CONTROL CIRCUIT INTO OPERATION — S13

F I G . 1 0

# F I G . 1 1

# EP 1 612 955 A1

<table>
<tr><td colspan="2" align="center">**INTERNATIONAL SEARCH REPORT**</td><td colspan="2">International application No.<br>PCT/JP2004/000503</td></tr>
</table>

**A. CLASSIFICATION OF SUBJECT MATTER**
Int.Cl⁷ H04B1/40

According to International Patent Classification (IPC) or to both national classification and IPC

**B. FIELDS SEARCHED**

Minimum documentation searched (classification system followed by classification symbols)
Int.Cl⁷ H04B1/38-H04B1/40

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-217774 A (Sanyo Electric Co., Ltd.),<br>02 August, 2002 (02.08.02),<br>Full text; all drawings<br>(Family: none) | 1-4 |
| Y | JP 10-242886 A (Sony Corp.),<br>11 September, 1998 (11.09.98),<br>Full text; all drawings<br>(Family: none) | 1-4 |
| Y | JP 10-290173 A (Sony Corp.),<br>27 October, 1998 (27.10.98),<br>Full text; all drawings<br>(Family: none) | 5-8 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>20 April, 2004 (20.04.04) | Date of mailing of the international search report<br>11 May, 2004 (11.05.04) |
|---|---|
| Name and mailing address of the ISA/<br>Japanese Patent Office | Authorized officer |
| Facsimile No. | Telephone No. |

Form PCT/ISA/210 (second sheet) (January 2004)

21

# EP 1 612 955 A1

<table>
<tr><td colspan="2">INTERNATIONAL SEARCH REPORT</td><td>International application No.<br>PCT/JP2004/000503</td></tr>
<tr><td colspan="3">C (Continuation).   DOCUMENTS CONSIDERED TO BE RELEVANT</td></tr>
<tr><td>Category*</td><td>Citation of document, with indication, where appropriate, of the relevant passages</td><td>Relevant to claim No.</td></tr>
<tr><td>Y</td><td>JP 5-37408 A   (Kokusai Electric Co., Ltd.),<br>12 February, 1993 (12.02.93),<br>Full text; all drawings<br>(Family: none)</td><td>5-8</td></tr>
<tr><td>Y</td><td>JP 9-107299 A   (NEC Saitama, Ltd.),<br>22 April, 1997 (22.04.97),<br>Full text; all drawings<br>(Family: none)</td><td>1-8</td></tr>
<tr><td>Y</td><td>JP 11-55138 A   (Fujitsu Ltd.),<br>26 February, 1999 (26.02.99),<br>Full text; all drawings<br>(Family: none)</td><td>5-8</td></tr>
</table>

Form PCT/ISA/210 (continuation of second sheet) (January 2004)

22